# EUROPÄISCHE PATENTANMELDUNG

(11) **EP 4 411 189 A1**
(43) Veröffentlichungstag der Anmeldung: **07.08.2024**
(21) Anmeldenummer: 24152509.6
(22) Anmeldetag: 18.01.2024
(51) Int. Cl.: F16L 9/12, F16L 9/133, B32B 1/08, B29C 65/02

(54) **MEDIENBESTÄNDIGES FASERVERBUNDROHR**

(30) Priorität: 02.02.2023 DE 102023102603
(71) Anmelder: Diehl Aviation Laupheim GmbH, 88471 Laupheim (DE)
(72) Erfinder: Pfinder, Dirk, 88481 Balzheim (DE); Ade, Fabian, 88339 Bad Waldsee (DE); Denzel, Michael, 88416 Oberstetten (DE); Janke, Marco-Reyes, 89231 Neu-Ulm (DE); Werner, Mario, 88339 Bad Waldsee (DE); Hänle, Christian, 89079 Ulm (DE)
(74) Vertreter: Diehl Patentabteilung

(57) **Zusammenfassung**

Bei einem Verfahren zum Herstellen eines Rohres (2) mit einem Faserverbundmaterial (8), wobei das Rohr (2) im Betrieb ein bestimmtes Medium (14) aufnimmt, wird das Faserverbundmaterial (8) als Grundkörper (24) in einem Formwerkzeug (18) angeordnet und ein gegenüber dem Medium medienbeständiger Schlauchkörpers (16) im Grundkörper (24) platziert, und beide einem Thermoformen unterzogen, wobei der Schlauchkörpers (16) mit Druck beaufschlagt wird und an den Grundkörper (24) und dieser an das Formwerkzeugs (18) angelegt wird, um Grundkörper (24) und Schlauchkörper (16) zum Rohr (2) zu konsolidieren, wobei das Material des Schlauchkörpers (16) derart medienbeständig ist, dass es von diesem Medium (14) zumindest für eine geplante Einsatzdauer nicht angegriffen wird, wobei das Faserverbundmaterial (8) so gewählt wird, dass es zumindest in einem Fertigungszustand (F) gegenüber dem Medium (14) nicht im obigen Sinne medienbeständig ist.

Bei einem Rohr (2) ist der Grundkörper (24) zusammen mit dem Schlauchkörper (16) zum Rohr (2) konsolidiert.

## Beschreibung

Die Erfindung betrifft ein Rohr, insbesondere in Form eines Kühlmittelrohres im Kühlkreislauf einer Brennstoffzelle.

Rohre sind in der Regel für bestimmte Einsatzzwecke bestimmt bzw. gedacht. Dies ist so zu verstehen, dass in einem Innenraum des Rohres im Betrieb ein bestimmtes Medium aufzunehmen bzw. zu führen ist. Das Material, aus dem das Rohr, d.h. dessen Wandung hergestellt ist bzw. besteht, ist daher so zu wählen, dass es gegenüber dem Medium (medien-)beständig ist. Das heißt, dass es von diesem Medium nicht oder - im Hinblick auf eine geplante Einsatzdauer - zumindest nicht merklich / wesentlich, insbesondere jedoch dauerhaft - angegriffen wird.

So ist es zum Beispiel aus der Praxis bekannt, die o.g. Kühlmittelrohre im Kühlkreislauf einer Brennstoffzelle aus Metall, vor allem Edelstahl, herzustellen.

Aufgabe der vorliegenden Erfindung ist es, Verbesserungen im Hinblick auf ein entsprechendes Rohr vorzuschlagen.

Die Aufgabe wird gelöst durch ein Verfahren gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Das Verfahren dient zum Herstellen eines Rohres. Das Rohr weist eine Wandung auf, die einen Innenraum des Rohres umgibt. Das (gefertigte, im Fertigungszustand) Rohr bzw. dessen Wandung enthält ein (zumindest in einem Ausgangszustand) thermoformbares Faserverbundmaterial. Mit anderen Worten ist das entsprechende Faserverbundmaterial Teil der Wandung.

Das Rohr ist dazu bestimmt, in seinem Innenraum im Betrieb ein bestimmtes Medium aufzunehmen bzw. zu führen. Die vorliegenden Aussagen bezüglich des (einen) Mediums / Beständigkeit gelten sinngemäß auch für mehrere / andere Medien, die zum Beispiel zu verschiedenen Zeitpunkten durch das Rohr zu führen bzw. in diesem aufzunehmen sind.

Das Faserverbundmaterial ist so gewählt, dass es zumindest in einem Fertigungszustand, also im endgefertigten Rohr, gegenüber dem Medium nicht (medien-)beständig ist. Dies ist sinngemäß gegensätzlich zu oben zu verstehen: Es handelt sich also - insbesondere für eine geplante Einsatzdauer - um eine merkliche, nicht unwesentliche Durchlässigkeit für das Medium. Die Durchlässigkeit ist also größer, insbesondere um Größenordnungen, als die des Schlauchkörpers (siehe unten). Der Fertigungszustand ist der, nachdem das Rohr hergestellt wurde bzw. das vorliegende Herstellungsverfahren abgeschlossen ist. Mit anderen Worten ist es auch der Betriebszustand, in dem bestimmungsgemäß das betreffende Medium im Innenraum des Rohres aufzunehmen ist.

Das Verfahren weist folgende Schritte auf:
Ein Faserverbundmaterial für das Rohr wird bereitgestellt. Das Faserverbundmaterial befindet sich dabei in einem Ausgangszustand. Der Ausgangszustand ist ein Vorfertigungszustand, zum Beispiel ist das Material ein Prepreg-Material, bei dem Fasern in einem Matrixmaterial / Matrixanteil vorhanden sind. Ein entsprechendes Matrixmaterial, kurz Matrix, ist insbesondere ein Harz. Der Ausgangszustand ist also z.B. der, wenn das Material als Halbzeug vorhanden ist.

Weiterhin wird ein expandierbarer Schlauchkörper (auch "Liner" genannt) bereitgestellt, der sich ebenfalls in einem Ausgangszustand befindet.

Weiterhin wird ein Formwerkzeug bereitgestellt. Das Formwerkzeug weist einen Hohlraum auf. Der Hohlraum ist von einer inneren Formwand des Formwerkzeugs begrenzt. Die innere Formwand bestimmt die Außenform des zu fertigenden Rohres im Fertigungszustand.

Gemäß dem Verfahren wird das Faserverbundmaterial als Grundkörper für das Rohr innerhalb des Hohlraumes aufgenommen und angeordnet. Der Grundkörper ist ein Gegenstand, aus dem das Rohr zu fertigen ist, der also später Bestandteil des Rohres wird. Der Grundkörper wird später zum insbesondere wesentlichen Anteil der Wandung des Rohres. Der Grundkörper wird so gestaltet, dass er bereits einen Innenraum aufweist, der später der Innenraum des Rohres sein wird. Dabei weist er eine seinen Innenraum begrenzende Innenwand auf. Der Innenraum wird später im Fertigungszustand zum Innenraum des Rohres. Dabei wird der Innenraum in der Regel noch wachsen. Der Grundkörper befindet sich dabei nach wie vor in einem Vorfertigungszustand bzw. aus Materialsicht in dem Ausgangszustand. Der Grundkörper ist insbesondere bereits rohrförmig gestaltet. Er weist also bereits die Grundform / annähernde Form des endgefertigten Rohres auf. Der Grundkörper kann dabei auch mehrteilig sein, z.B. durch zwei Halbschalen gebildet sein. Insbesondere handelt es sich um eine Belegung des Formwerkzeugs bzw. der Formwand. Überlappungen von Teilen des Grundkörpers sind hierbei möglich.

Gemäß dem Verfahren wird ein Schlauchkörper im Innenraum des Grundkörpers angeordnet, also innerhalb der Innenwand des Grundkörpers. Die Reihenfolge ist hierbei nicht entscheidend: Gegebenenfalls kann dies im Formwerkzeug erfolgen. Es kann aber auch erst ein Grundkörper um den Schlauchkörper herum aufgebaut werden und beides zusammen in den Hohlraum des Formwerkzeugs eingebracht werden. Entscheidend ist, dass am Ende dieser beiden Schritte der Grundkörper im Hohlraum und der Schlauchkörper im Innenraum des Grundkörpers im Hohlraum angeordnet ist. Dabei können ggf. Teile des Schlauchkörpers auch noch aus dem Grundkörper und / oder dem Hohlraum herausragen.

Sodann erfolgt das Erwärmen des Grundkörpers bis über eine Schmelztemperatur eines Matrixanteils des Faserverbundmaterials. Mit anderen Worten wird im Faserverbundmaterial, insbesondere in den oben genannten Prepregs, der Harzanteil bzw. Matrixanteil aufgeschmolzenen, wie bei der Fertigung von Bauteilen aus Faserverbundmaterial fachüblich.

Anschließend bzw. dabei erfolgt das Thermoformen des Grundkörpers durch folgende Schritte:
Es erfolgt eine innere Druckbeaufschlagung des Schlauchkörpers. Mit anderen Worten wird der Schlauchkörper gefüllt / aufgeblasen / mit Innendruck beaufschlagt. Hierdurch erfolgt ein Anlegen des Schlauchkörpers an die Innenwand des Grundkörpers vom Innenraum her. Dies geht gegebenenfalls mit einer Expansion des Schlauchkörpers in Richtung zum Grundkörper bzw. der Formwand hin einher. Das Anlegen kann auch als Anpressen bezeichnet werden.

Vermittels des angelegten bzw. sich von innen her an den Grundkörper anpressenden Schlauchkörpers erfolgt wiederum ein sinngemäß entsprechendes Anlegen oder Anpressen des Grundkörpers an die Formwand des Formwerkzeugs. Auch dies ist ein gegebenenfalls expandierender Vorgang, bei dem sich der Grundkörper verformt / bewegt.

So erfolgt ein Konsolidieren des Grundkörpers zusammen mit dem Schlauchkörper zum Rohr bzw. zur Wandung des Rohres. Mit anderen Worten wird der Schlauchkörper als eine Innenauskleidung bzw. Funktionsschicht von innen her an den Grundkörper angebracht und mit diesem fest und dauerhaft verbunden, insbesondere stoffschlüssig verbunden. Hierzu wird insbesondere der Matrixanteil des Faserverbundmaterials genutzt. Schlauchkörper und Grundkörper zusammen bilden somit die Wandung des Rohres. Der Innenraum des Rohres ist somit vom Schlauchkörper begrenzt. Der Schlauchkörper verbleibt also im endgefertigten Rohr als dessen dauerhafter integraler Bestandteil.

Anschließend erfolgt ein Abkühlen und Entformen des konsolidierten Rohres aus dem Formwerkzeug. Das Rohr befindet sich nunmehr in seinem Fertigungszustand.

In dem Verfahren wird der Schlauchkörper so gewählt, dass dessen Material im obigen Sinne zumindest im Fertigungszustand medienbeständig gegenüber dem bestimmungsgemäß im Rohr aufzunehmenden Medium ist. Die Medienbeständigkeit ist also größer als die des Faserverbundmaterials, insbesondere merklich (z.B. Faktor 1,5 / 2 / 3 /...), insbesondere um ein Vielfaches oder sogar um Größenordnungen.

Gemäß der Erfindung wird der Schlauchkörper / Liner also zu einer den Innenraum begrenzenden Funktionsschicht in einem / Bestandteil eines Faserverbundrohres (thermogeformter und konsolidierter Grundkörper / Wandung).

Gemäß der Erfindung wird also durch die Integration einer insbesondere thermoplastischen Funktionsschicht (Schlauchkörper) in ein Faserverbundrohr (dessen Grundkörper) direkt im Herstellungsprozess die Dichtigkeit und Beständigkeit des Rohres gegenüber einem bestimmten / bestimmungsgemäßen Medium sichergestellt. Außerdem wird die Funktionsschicht bzw. Innenschicht im Herstellungsprozess gleichzeitig als Druckschlauch zur Herstellung verwendet.

Gemäß der Erfindung ergibt sich ein geringes Gewicht des Rohres, ein schneller Herstellungsprozess, die mögliche Integration einer Verbindungsgeometrie direkt im Herstellungsprozess (siehe unten) und die Möglichkeit, (insbesondere thermoplastische) Anschlussstücke (Verbindungsgeometrie) stoffschlüssig mit der (insbesondere thermoplastischen) Funktionsschicht (Schlauchkörper) zu verbinden, siehe unten.

Gemäß der Erfindung ergibt sich ein dichtes fluidführendes Rohr aus Faserverbundwerkstoff, die Integration einer (insbesondere thermoplastischen) Funktionsschicht in ein fluidführendes Rohr direkt im Herstellungsprozess und die Kombination einer insbesondere duroplastischen Rohrstruktur (Grundkörper) mit einer insbesondere thermoplastischen Funktionsschicht (Schlauchkörper).

In einer bevorzugten Ausführungsform wird als Material des Schlauchkörpers ein thermoplastisches Material gewählt. Das thermoplastische Material ist insbesondere Tedlar. Derartige Materialien sind für das erfindungsgemäße Rohr besonders geeignet.

In einer bevorzugten Ausführungsform wird als Faserverbundmaterial ein duroplastisches Material gewählt. Dies betrifft den Matrixanteil des Faserverbundmaterials, nicht jedoch dessen Fasern. Mit anderen Worten wird ein duroplastischer Matrixanteil im Faserverbundmaterial gewählt. Derartiges Material ist für die erfindungsgemäßen Rohre besonders geeignet.

In einer bevorzugten Ausführungsform wird als Rohr ein Kühlmittelrohr für den Kühlkreislauf einer Brennstoffzelle hergestellt. Mit anderen Worten ist das zu fertigende Rohr also ein Kühlmittelrohr für den Kühlkreislauf einer Brennstoffzelle. Bei derartigen Rohren kann die Erfindung besonders günstig eingesetzt werden, da hierdurch zum Beispiel aufwändige und teure Rohre aus Metall bzw. Edelstahl durch die erfindungsgemäßen Rohre ersetzt werden können.

In einer bevorzugten Ausführungsform geht die Erfindung davon aus, dass das Medium ein (bestimmtes) Kühlmittel ist. Mit anderen Worten wird das Material des Schlauchkörpers so gewählt, dass er medienbeständig gegenüber dem bestimmten Kühlmittel ist. So können gemäß dem Verfahren medienbeständig Kühlmittelrohre geschaffen werden.

In einer bevorzugten Ausführungsform geht das Verfahren davon aus, dass das Medium ein (bestimmtes) Glykol-Wassergemisch ist. Mit anderen Worten wird das Material des Schlauchkörpers so gewählt, dass es medienbeständig gegenüber dem bestimmten Glykol-Wasser-Gemisch ist. So können gemäß der Erfindung betreffende Rohre geschaffen werden, die derart medienbeständig sind.

In einer bevorzugten Ausführungsform wird der Schlauchkörper zumindest vor und bis zur, insbesondere auch während der, Druckbeaufschlagung entlang einer Längsrichtung des Grundkörpers auf Zug gehalten. Die Längsrichtung erstreckt sich also längs bzw. innerhalb des Rohres bzw. folgt dessen Verlaufslinie bzw. dem Verlauf des rohrförmigen Innenraums bzw. der Innenwand. Hierdurch kann vor und bis zur Konsolidierung ein besonders gutes Anliegen des Schlauchkörpers an dem Grundkörper sichergestellt werden.

In einer bevorzugten Ausführungsform wird der Hohlraum nach dem Aufnehmen des Grundkörpers und des Schlauchkörpers und vor der Konsolidierung mit einem endseitigen Stopfen verschlossen. Insbesondere erfolgt das Verschließen vor der Druckbeaufschlagung des Schlauchkörpers. Die Druckbeaufschlagung erfolgt dabei insbesondere durch den Stopfen hindurch. Hierzu weist der Stopfen insbesondere einen Druckkanal / eine Zufuhröffnung für ein Druckmedium auf, der vom Außenraum derart zum Hohlraum reicht, dass der Schlauchkörper durch den Stopfen hindurch in seinem Inneren mit Druck beaufschlagt werden kann. Das Herstellungsverfahren kann so besonders einfach durchgeführt werden.

In einer bevorzugten Variante dieser Ausführungsform wird daher ein Stopfen bereitgestellt, der eine Zufuhröffnung zur Zufuhr eines Druckmediums in das Innere des Schlauchkörpers aufweist, wie oben erläutert.

In einer bevorzugten Ausführungsform wird ein Stopfen bereitgestellt, der ein Zugmittel und / oder Haltemittel für den Schlauchkörper aufweist. Das Haltemittel dient dazu, den Zug am Schlauchkörper aufrecht zu erhalten, indem der Schlauch durch das Haltemittel auf Zug gehalten wird. Das Zugmittel dient dazu, den Zug aufzubauen. So kann der Zug am Schlauchkörper besonders einfach geschaffen bzw. bewirkt (Zugmittel) und oder gehalten (Haltemittel) werden.

In einer bevorzugten Ausführungsform wird vor dem Konsolidieren eine Verbindungsgeometrie in das Formwerkzeug eingelegt. Beim Konsolidieren wird die Verbindungsgeometrie formschlüssig und / oder stoffschlüssig mit dem Grundkörper verbunden. Die Verbindungsgeometrie ist insbesondere ein Anschlussstück. Die Verbindungsgeometrie ist insbesondere aus thermoplastischem Material oder aus Metall, z. B. Aluminium / Edelstahl gefertigt. Zur Anbindung der Verbindungsgeometrie an den Grundkörper wird insbesondere der Matrixanteil bzw. das Harz aus dem Grundmaterial des Grundkörpers genutzt. Der Formschluss wird insbesondere durch Strukturen (Vorsprünge, Nuten, Durchbrechungen) wie zum Beispiel Rippen oder Noppen usw. bewirkt, die insbesondere in Umfangsrichtung um eine Innenwand und / oder Außenwand der Verbindungsgeometrie angeordnet sind. Die Strukturen sind insbesondere auf derjenigen Kontaktseite bzw. dem Kontaktbereich der Verbindungsgeometrie angeordnet, die mit dem Grundkörper in Kontakt steht. So können einfach bestimmte Verbindungsgeometrien am Rohr vorgesehen und hergestellt werden.

In einer bevorzugten Variante dieser Ausführungsform stellt die Verbindungsgeometrie eine Verlängerung des Rohres bzw. der Wandung des Rohres dar, bildet insbesondere einen endseitigen Abschnitt der Wandung. Die Innenwand des Grundkörpers setzt sich dabei in die Verbindungsgeometrie fort. Eine Innenwand der Verbindungsgeometrie setzt also die Innenwand des Grundkörpers in die Verbindungsgeometrie hinein fort. Auch die Innenwand der Verbindungsgeometrie wird dann zumindest abschnittsweise, insbesondere vollständig, mit dem Schlauchkörper ausgekleidet und mit diesem konsolidiert. So kann ein insbesondere thermoplastisches Anschlussstück / Verbindungsgeometrie ebenfalls mit der Funktionsschicht ausgekleidet und dadurch medienbeständig ertüchtigt werden. Auch kann die Verbindungsgeometrie so stoffschlüssig mit dem Rohr verbunden werden.

In einer bevorzugten Ausführungsform werden sowohl der Grundkörper als auch der Schlauchkörper jeweils mit - zueinander passend - einem Hauptrohr und wenigstens einem vom Hauptrohr abzweigenden Abzweigrohr bereitgestellt. Gemäß dem Verfahren werden dann Grundkörper und Schlauchkörper zusammen konsolidiert. So entsteht ein Gebilde (aus Rohr mit Abzweigrohr(en)), dessen Wandung vollständig durch einen Grundkörper gebildet ist, der innen vollständig mit dem Schlauchkörper belegt bzw. ausgekleidet ist. Am rohrförmigen Schlauchkörper (entsprechend dem Hauptrohr) wird ein entsprechender Fortsatz / Abzweigrohr zum Beispiel als Abzweiger mittels Ultraschallschweißen oder ähnlichem angebracht. So können auch komplexe Rohre aus Faserverbundmaterial medienbeständig hergestellt bzw. ausgeführt werden.

In einer bevorzugten Ausführungsform wird das Material des Schlauchkörpers und / oder des Faserverbundmaterials wie folgt gewählt: Das Material ist zumindest in dem Fertigungszustand gegen eine Eindiffusion eines bestimmten Stoffes / von Stoffen in den Innenraum beständig. Die Stoffe sind solche, die eine elektrische Leitfähigkeit des bestimmungsgemäß im Rohr aufzunehmenden Mediums erhöhen würden. Die Stoffe sind insbesondere Ionen. "Eindiffusion" bezieht sich hier auf das Durchdringen von Faserverbundmaterial und/oder Schlauchkörper von außen zum Innenraum hin.

Mit anderen Worten wird so also ein Eintrag von Stoffen (von Ionen) von außen in den Innenraum verhindert oder zumindest verringert / minimiert.

Insbesondere gilt diese Ausführungsform für Medien, die nicht oder nur unwesentlich elektrisch leitfähig sind und durch Einbringen der Stoffe merklich leitfähiger werden könnten.

Insbesondere gilt diese Ausführungsform in Verbindung mit derjenigen, dass das Medium ein Kühlmittel für eine Brennstoffzelle ist. Bei diesen Medien ist es besonders wichtig, dass diese nicht durch Eintrag von Stoffen wie Ionen - zumindest allmählich bzw. bezogen auf eine geplante Einsatzdauer - in ihrer elektrischen Leitfähigkeit erhöht werden.

Diese Ausführungsform bezieht sich also nicht wie oben auf einen Schutz des Faserverbundmaterials vor einem im Rohr geführten Medium, sondern auf einen Schutz des Mediums vor einem von außen eingetragenen Stoff.

In einer bevorzugten Variante dieser Ausführungsform wird der medienbeständige Schlauchkörper mit einer Schutzschicht versehen, z.B. bedampft, z.B. mit Aluminium, um vor dem Eindringen des Stoffes zu schützen. Durch die Beschichtung wird dem Schlauchkörper also neben der Medienbeständigkeit eine Zweifunktion als Schutzmantel für besagte Stoffe verliehen. Die Beschichtung geschieht vor dem Anordnen des Schlauchkörpers in dem Innenraum, insbesondere vor dessen Bereitstellung im Rahmen des Verfahrens.

Die Aufgabe der Erfindung wird auch gelöst durch ein Rohr gemäß Patentanspruch 15. Das Rohr entspricht genau dem oben bereits erläuterten Rohr im Fertigungszustand: Das Rohr enthält das thermoformbare Faserverbundmaterial und ist wie oben dazu bestimmt, im Betrieb in seinem Innenraum das bestimmte Medium aufzunehmen, wobei das Faserverbundmaterial des Rohres (hier im Fertigungszustand) gegenüber dem Medium nicht medienbeständig ist. Das Rohr enthält den Grundkörper aus dem Faserverbundmaterial. Das Rohr enthält den Schlauchkörper, der im Innenraum des Grundkörpers angeordnet ist und an einer Innenwand des Grundkörpers angelegt ist. Der Grundkörper ist zusammen mit dem Schlauchkörper zum Rohr bzw. dessen Wandung konsolidiert. Der Schlauchkörper ist so gewählt, dass dessen Material medienbeständig gegenüber dem bestimmungsgemäß im Rohr aufzunehmenden Medium ist.

Das Rohr und zumindest ein Teil dessen möglicher Ausführungsformen sowie die jeweiligen Vorteile wurden sinngemäß bereits im Zusammenhang mit dem erfindungsgemäßen Verfahren erläutert.

In einer bevorzugten Ausführungsform ist das Rohr nach dem erfindungsgemäßen Verfahren hergestellt. Das Rohr kann somit besonders günstig hergestellt werden.

Das Rohr ist insbesondere das oben erläuterte Kühlmittelrohr, insbesondere das Kühlmittelrohr im bzw. für den Kühlkreislauf der Brennstoffzelle. Das Rohr ist insbesondere gegenüber dem (insbesondere im Kühlkreislauf zirkulierenden) Kühlmittel, insbesondere dem Glykol-Wasser-Gemisch, medienbeständig.

Die Erfindung beruht auf folgenden Erkenntnissen, Beobachtungen bzw. Überlegungen und weist noch die nachfolgenden bevorzugten Ausführungsformen auf. Diese Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Gemäß der Erfindung wird eine (insbesondere thermoplastische) Funktionsschicht (Schlauchkörper, insbesondere Kunststoffe die eine entsprechende Medienbeständigkeit haben und oberhalb der Einsatztemperatur liegen und innerhalb der Prozesstemperatur von ca. 100 - 160°C umformbar sind wie z.B. PP; Tedlar, PVDF, und weitere) insbesondere in einem vorgelagerten Prozess zu einem Schlauch geformt, z.B. verschweißt oder direkt extrudiert.

Die Rohrstruktur (Grundkörper) wird mittels bekannter Herstellverfahren NDS (Niederdruck-Schlauch-Verfahren) / HDS (Hochdruck-Schlauch-Verfahren) / etc. belegt und mit der Funktionsschicht als Druckschlauch (Schlauchkörper) versehen. Die Werkzeugenden (Formwerkzeug) sind mit Dichtstopfen, für eine stirnseitige Abdichtung, ausgeführt. Das Werkzeug durchläuft nun im Ofen den üblichen Aushärteprozess. Als Faserverbundwerkstoffe kommen hier insbesondere üblichen luftfahrtzugelassene Cyanat-Ester- oder Phenolprepregs in Betracht. Nach dem Abkühlen wird das Werkzeug geöffnet und das Bauteil (Rohr) entformt. Der thermoplastische Schlauch (Schlauchkörper) wurde durch den Innendruck an die Rohrwandung (Innenwand des Grundkörpers) angedrückt und wo nötig aufgedehnt. Durch das Harz im Prepreg (Grundkörper) wird der Schlauch unlösbar / stoffschlüssig mit dem (restlichen) Rohr (Grundkörper) verbunden. Dadurch entsteht ein Verbundrohr, welches durch die innere Schicht (Schlauchkörper) die Anforderungen an Dichtigkeit, Medienbeständigkeit, etc. erfüllt und die äußere Schicht (Grundkörper) aus Faserverbundwerkstoff die Festigkeit gewährleistet.

Der Grundkörper wird insbesondere als halbschalenartige Lagen-Belegung Oberseite und Lagen-Belegung Unterseite für das (zweiteilige: Oberteil, Unterteil) Formwerkzeug ausgeführt. Der Grundkörper bildet somit eine Rohrstruktur aus Faserverbund. Der Schlauchkörper bildet somit eine Funktionsschicht. Der Schlauch ist insbesondere ein geschweißter Schlauch. Der Dichtstopfen wird auch als Werkzeugend Stück bezeichnet.

Der Schlauchkörper ist insbesondere ein gerader Standardschlauch ohne Abzweiger. Abzweiger werden dann mittels Ultraschallschweißen oder Ähnlichem an diesem Standardschlauch angebracht. Anschließend wird der angepasste Schlauch ins Formwerkzeug eingelegt. Der Schlauch entspricht somit einem herkömmlicherweise in einem entsprechenden Verfahren verwendeten Silikonschlauch (der nach der Fertigung wieder aus dem Rohr entfernt wird), verbleibt jedoch im Unterschied hierzu als Dichtschicht im Bauteil / Rohr. Gemäß der Erfindung können so auch Leckagen, die hauptsächlich im Bereich der Abzweiger auftreten, wirksam vermieden werden (Stichwort: Faserverzug).

Die Verbindungsgeometrie ist insbesondere aus Aluminium oder Stahl gefertigt.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:
- Fig. 1: ein Rohr im Fertigungszustand in perspektivischer Ansicht,
- Fig. 2: das Rohr aus Fig. 1 in einem Formwerkzeug während der Herstellung in einer Ansicht gemäß Fig. 1,
- Fig. 3: das Rohr aus Fig. 2 in dem detaillierter dargestellten Formwerkzeug zu einem späteren Zeitpunkt der Herstellung in Schnittdarstellung,
- Fig. 4: ein alternatives Rohr im Fertigungszustand in einem Teilschnitt.

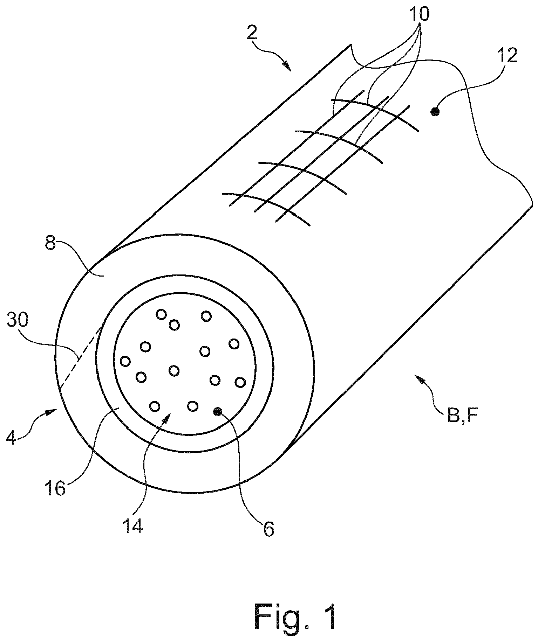

Figur 1 zeigt ein Rohr 2. Dieses weist eine Wandung 4 auf, die einen Innenraum 6 des Rohres 2 umgibt. Das Rohr 2 bzw. dessen Wandung 4 enthält ein Faserverbundmaterial 8, dass Thermoformen wahr ist. Das Faserverbundmaterial 8 enthält Fasern 10, die in einer Matrix in Form eines Matrixanteils 12, hier Harz, eingebetteten sind. Dies ist in Figur 1 lediglich symbolisch angedeutet. Das Rohr 2 ist hier ein Rohr eines nicht näher dargestellten Kühlkreislaufes einer Brennstoffzelle.

Gezeigt ist das Rohr 2 in einem Fertigungszustand F, d.h. nachdem dieses durch ein Herstellungsverfahren hergestellt wurde. Weiterhin ist das Rohr 2 in einem Betrieb B gezeigt.

Das Rohr 2 ist dazu bestimmt, im Betrieb B in seinem Innenraum 6 ein Medium 14 (angedeutet durch Punkte), hier ein Kühlmittel des Kühlkreislaufes der Brennstoffzelle zu führen. Das Medium 14 ist hier ein Glykol Wasser-Gemisch. Das Faserverbundmaterial 8 ist in dem Fertigungszustand F des Rohres 2 gegenüber dem Medium 14 nicht medienbeständig. Daher ist das Rohr mit einem Schlauchkörper 16 ausgekleidet, der gegenüber dem Medium beständig ist.

Im Rohr 2 bildet der Schlauchkörper 16 daher eine innere Funktionsschicht im Rohr 2 bzw. schützt das Faserverbundmaterial 8 vor Kontakt mit dem Medium 14 und begrenzt den Innenraum 6.

Bei dem Rohr 2 ist der Schlauchkörper 16 also so gewählt, dass dessen Material im Fertigungszustand F medienbeständig gegenüber dem bestimmungsgemäßen Medium 14 ist. Das Material des Schlauchkörpers 16 ist ein thermoplastisches Material, hier Tedlar. Das Faserverbundmaterial 8 ist ein duroplastisches Material, der Matrixanteil 12 ein Harz.

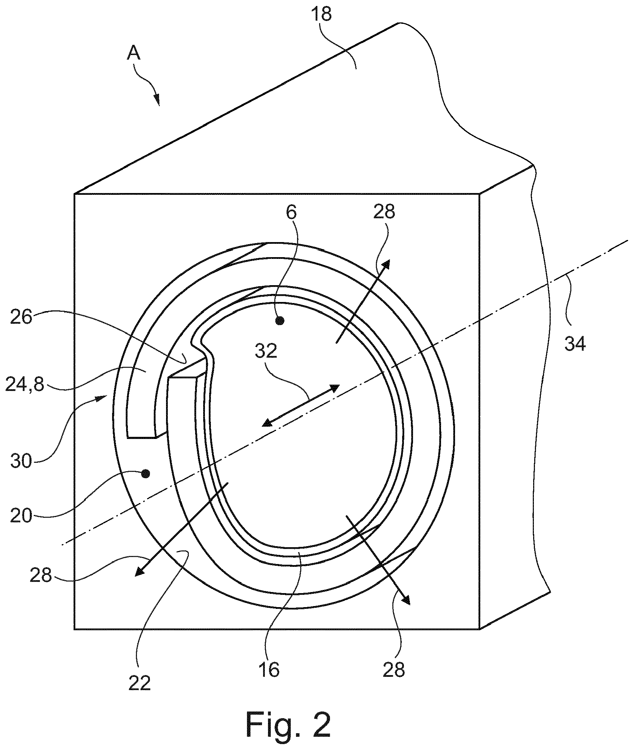

Figur 2 illustriert ein Verfahren zum Herstellen des Rohres 2 aus Figur 1.

Zunächst erfolgt das Bereitstellen des Faserverbundmaterials 8 für das Rohr 2, wobei sich das Faserverbundmaterial 8 hier in einem Ausgangszustand A befindet. Das Faserverbundmaterial 8 ist hier ein Prepreg, bei dem die Fasern 10 in dem Matrixanteil 12 eingelagert sind. Weiterhin erfolgt das Bereitstellen des expandierbaren Schlauchkörpers 16, ebenfalls in seinem Ausgangszustand A. Weiterhin erfolgt das Bereitstellen eines Formwerkzeugs 18. Dieses weist einen Hohlraum 20 auf, der von einer Formwand 22 des Formwerkzeugs 18 begrenzt ist. Die Formwand 22 bestimmt (später) die Außenform des zu fertigenden Rohres 2.

Nun erfolgt das Aufnehmen / Einlegen des Faserverbundmaterials 8 im Hohlraum 20 und das Anordnen des Faserverbundmaterials 8 in dem Hohlraum 20 derart, dass es als Grundkörper 24 für das Rohr 2 ausgestaltet ist. Die Anordnung erfolgt derart, dass der Grundkörper 24 eine seinen Innenraum 6 begrenzende Innenwand 26 aufweist. Hier erfolgt die Anordnung derart, dass das Faserverbundmaterial 8 zu einer losen Rolle aufgerollt und dann in den Hohlraum 20 eingelegt wird.

In einem weiteren Schritt wird der Schlauchkörper 16 im Innenraum 6 des Grundkörpers 24 angeordnet, hier in diesen eingeschoben.

Nach dem Einbringen in das Formwerkzeug 18 wird der Schlauchkörper 16 in Richtung des Pfeiles 32 entlang einer Längsrichtung 34 des späteren Rohres 2 bzw. des Grundkörpers 24 auf Zug gebracht bzw. gehalten.

In einem weiteren Schritt wird der Grundkörper 24 bis über die Schmelztemperatur seines Matrixanteils 12, d.h. der Matrix des Faserverbundmaterials 8 erwärmt. Nun erfolgt ein Thermoformen des Grundkörpers 24 wie folgt:
Es erfolgt eine innere Druckbeaufschlagung des Schlauchkörpers 16, d.h. dessen Innenraum 6 wird mit einem Druckmedium, hier Druckluft, befüllt. Der Schlauchkörper 16 expandiert hierbei in Richtung der Pfeile 28, also in Richtung zur Formwand 22 hin und legt sich hierbei an die Innenwand 26 des Grundkörpers 24 an. Durch weiteres Befüllen mit Druckmedium drückt der Schlauchkörper wiederum den Grundkörper 24 ebenfalls in Richtung der Pfeile 28 an die Formwand 22 des Formwerkzeugs 18 an. Hierbei nimmt der Grundkörper 24 bezüglich seiner Außenform die von der Formwand 22 vorgegebene Form (Form des späteren Rohres 2) an. Nunmehr wird der Grundkörper 24 zusammen mit dem Schlauchkörper 16 zu dem Rohr 2 bzw. dessen Wandung 4 konsolidiert. Dabei wird der Schlauchkörper dank des Matrixanteils 12 dauerhaft und unlösbar mit dem Grundkörper 24, hier stoffschlüssig, verbunden. Der verformte Grundkörper 24 und Schlauchkörper 16 sind nunmehr zur Wandung 4 verbunden.

Anschließend erfolgt das Abkühlen des nunmehr bereits geformten Rohres 2 und das Entformen aus dem Formwerkzeug 18. Das Rohr 2 befindet sich nun im Fertigungszustand F, wie er in Figur 1 dargestellt ist. Eine Überlappung 30 zweier Enden des Grundkörpers 24 ist im Rohr 2 bzw. dem Grundkörper 24 im Fertigungszustand F in Figur 1 praktisch nicht mehr erkennbar und nur noch durch eine gestrichelte Linie angedeutet.

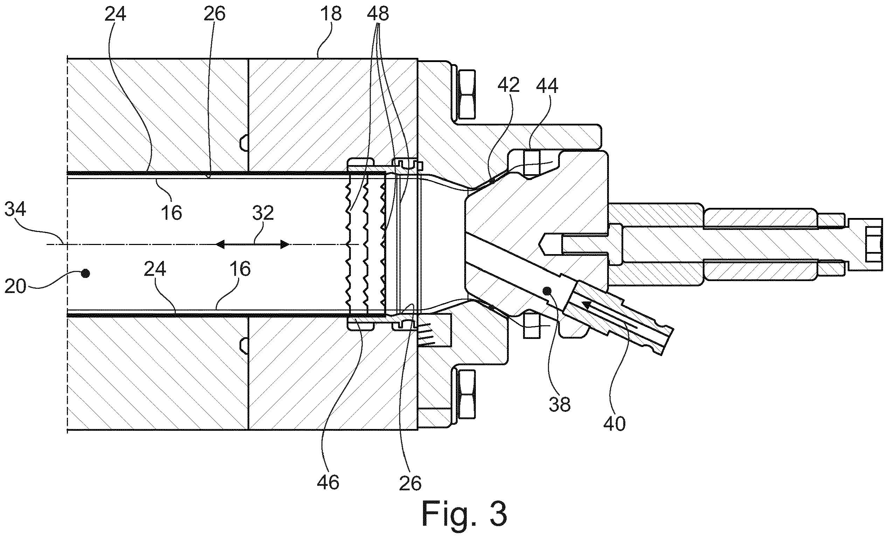

Figur 3 zeigt in einer Schnittdarstellung nochmals einen im Vergleich zu Fig. 2 späteren Zeitpunkt des Herstellungsverfahrens an dem Rohr 2. In dem Formwerkzeug 18 bzw. dessen Hohlraum 20 ist bereits der Grundkörper 24 eingelegt und der Schlauchkörper 16 ebenfalls eingelegt und bereits expandiert. Ein Stopfen 36 verschließt dabei das Formwerkzeug 18 bzw. dessen Hohlraum 20 endseitig. Der Stopfen wurde nach dem Aufnehmen des Grundkörpers 24 und des Schlauchkörpers 16 und vor der Konsolidierung angebracht. Das Ende des Schlauchkörpers 16 ist hierbei über den Stopfen 36 übergestülpt. Durch Einklemmen des Schlauchkörpers 16 zwischen Stopfen 36 und Formwerkzeug 18 wird der Zug in Richtung des Pfeils 32 aufrechterhalten.

Der Stopfen 36 weist eine Zufuhröffnung 38 zur Zuführung eines hier nur durch einen Pfeil symbolisierten Druckmediums 40 in das Innere des Schlauchkörpers 16 auf. Der Stopfen 36 weist außerdem als Haltemittel 42 zur Aufrechterhaltung des Zuges am Schlauchkörper 16, hier einen Dichtring, auf. Ein Zugmittel 44, welches Zug auf den Schlauchkörper 16 ausübt, um diesen auch anfänglich überhaupt zu spannen, ist lediglich symbolisch angedeutet.

In dem Formwerkzeug 18 ist auch eine Verbindungsgeometrie 46, hier aus Thermoplast, eingelegt. Beim Konsolidieren des Rohres 2 wird die Verbindungsgeometrie 46 hier formschlüssig und stoffschlüssig mit dem Grundkörper 24 verbunden, was vorliegend hinsichtlich Formschluss durch nicht näher erläuterte Rippen 48 an der Verbindungsgeometrie 46 bewerkstelligt ist, welche in Umfangsrichtung um die Längsrichtung 34 verlaufen. Die Verbindungsgeometrie 46 stellt in Richtung der Längsrichtung 34 eine Verlängerung des Rohres 2 bzw. von dessen Wandung 4 dar. Die Innenwand 26 des Grundkörpers 24 setzt sich als Innenwand 26 der Verbindungsgeometrie 46 in diese hinein fort. Auch die Innenwand 26 der Verbindungsgeometrie 46 ist damit mit dem Schlauchkörper 16 ausgekleidet und konsolidiert, hier stoffschlüssig verbunden.

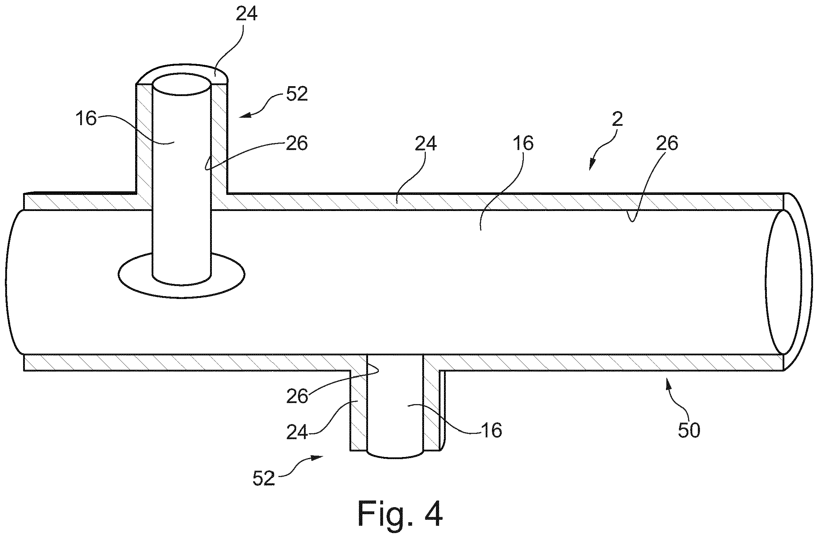

Figur 4 zeigt ein alternatives Rohr 2. Dieses weist ein Hauptrohr 50 sowie zwei, vom Hauptrohr 50 abzweigende Abzweigrohre 52 auf. Sowohl der Grundkörper 24 (hier halb geschnitten dargestellt) als auch der Schlauchkörper 16 (vollständig dargestellt) weisen die entsprechenden Abzweigrohre 52 und das Hauptrohr 50 auf. Sämtliche Bestandteile einschließlich Hauptrohr 50 und Abzweigrohr 52 werden zu einem einzigen Rohr 2 konsolidiert, wobei der Grundkörper 24 an allen Innenflächen / Innenwänden 26 durch den Schlauchkörper 16 ausgekleidet ist und somit vor Kontakt mit dem Medium 14 geschützt ist.

### Bezugszeichenliste

- 2: Rohr
- 4: Wandung
- 6: Innenraum (Rohr, Grundkörper, Schlauchkörper)
- 8: Faserverbundmaterial
- 10: Fasern
- 12: Matrixanteil
- 14: Medium
- 16: Schlauchkörper
- 18: Formwerkzeug
- 20: Hohlraum (Formwerkzeug)
- 22: Formwand
- 24: Grundkörper
- 26: Innenwand (Grundkörper, Verbindungsgeometrie)
- 28: Pfeil
- 30: Überlappung
- 32: Pfeil
- 34: Längsrichtung
- 36: Stopfen
- 38: Zufuhröffnung
- 40: Druckmedium
- 42: Haltemittel
- 44: Zugmittel
- 46: Verbindungsgeometrie
- 48: Rippen
- 50: Hauptrohr
- 52: Abzweigrohr

- B: Betrieb
- F: Fertigungszustand
- A: Ausgangszustand

## Patentansprüche

1. Verfahren zum Herstellen eines Rohres (2), das ein thermoformbares Faserverbundmaterial (8) enthält, wobei das Rohr (2) dazu bestimmt ist, in seinem Innenraum (6) im Betrieb ein bestimmtes Medium (14) aufzunehmen, mit folgenden Schritten:
- Bereitstellen des Faserverbundmaterials (8) für das Rohr (2) in einem Ausgangszustand (A),
- Bereitstellen eines expandierbaren Schlauchkörpers (16) in einem Ausgangszustand (A),
- Bereitstellen eines Formwerkzeugs (18) mit einem Hohlraum (20), der von einer inneren Formwand (22) des Formwerkzeugs (18) begrenzt ist, die die Außenform des zu fertigenden Rohres (2) bestimmt,
- Aufnehmen und Anordnen des Faserverbundmaterials (8) als Grundkörper (24) für das Rohr (2) innerhalb des Hohlraumes (20), so dass der Grundkörper (24) eine seinen Innenraum (6) begrenzende Innenwand (26) aufweist,
- Anordnen des Schlauchkörpers (16) im Innenraum (6) des Grundkörpers (24),
- Erwärmen des Grundkörpers (24) bis über eine Schmelztemperatur eines Matrixanteils (12) des Faserverbundmaterials (8),
- Thermoformen des Grundkörpers (24) durch:
- innere Druckbeaufschlagung des Schlauchkörpers (16) und hierdurch Anlegen des Schlauchkörpers (16) an die Innenwand (26) des Grundkörpers (24),
- und vermittels des angelegten Schlauchkörpers (16) Anlegen des Grundkörpers (24) an die Formwand (22) des Formwerkzeugs (18),
- Konsolidieren des Grundkörpers (24) zusammen mit dem Schlauchkörper (16) zum Rohr (2), wodurch der Schlauchkörper (16) in dem Rohr (2) als dessen dauerhafter Bestandteil verbleibt,
- Abkühlen und Entformen des konsolidierten Rohres (2) in einem Fertigungszustand (F) aus dem Formwerkzeug (18),
- wobei der Schlauchkörper (16) so gewählt wird, dass dessen Material zumindest im Fertigungszustand (F) medienbeständig gegenüber dem bestimmungsgemäß im Rohr (2) aufzunehmenden Medium (14) ist, wobei das Material derart medienbeständig ist, dass es von diesem Medium (14) zumindest für eine geplante Einsatzdauer nicht angegriffen wird,
- wobei das Faserverbundmaterial (8) so gewählt wird, dass es zumindest in einem Fertigungszustand (F) gegenüber dem Medium (14) nicht im obigen Sinne medienbeständig ist.

2. Verfahren nach Anspruch 1,
**dadurch gekennzeichnet, dass**
als Material des Schlauchkörpers (16) ein thermoplastisches Material gewählt wird.

3. Verfahren nach einem der vorhergehenden Ansprüche,
**dadurch gekennzeichnet, dass**
als Faserverbundmaterial (8) ein duroplastisches Material gewählt wird.

4. Verfahren nach einem der vorhergehenden Ansprüche,
**dadurch gekennzeichnet, dass**
als Rohr (2) ein Kühlmittelrohr für den Kühlkreislauf einer Brennstoffzelle hergestellt wird.

5. Verfahren nach einem der vorhergehenden Ansprüche,
**dadurch gekennzeichnet, dass**
das Medium (14) ein Kühlmittel ist.

6. Verfahren nach einem der vorhergehenden Ansprüche,
**dadurch gekennzeichnet, dass**
das Medium (14) ein Glykol-Wasser-Gemisch ist.

7. Verfahren nach einem der vorhergehenden Ansprüche,
**dadurch gekennzeichnet, dass**
der Schlauchkörper (16) zumindest vor und bis zur Druckbeaufschlagung entlang einer Längsrichtung (34) des Grundkörpers (24) auf Zug gehalten wird.

8. Verfahren nach einem der vorhergehenden Ansprüche,
**dadurch gekennzeichnet, dass**
der Hohlraum (20) nach dem Aufnehmen des Grundkörpers (24) und des Schlauchkörpers (16) und vor der Konsolidierung mit einem endseitigen Stopfen (36) verschlossen wird.

9. Verfahren nach Anspruch 8,
**dadurch gekennzeichnet, dass**
der Stopfen (36) derart bereitgestellt wird, dass er eine Zufuhröffnung (38) zur Zufuhr eines Druckmediums (40) in das Innere des Schlauchkörpers (16) aufweist.

10. Verfahren nach einem der Ansprüche 8 bis 9,
**dadurch gekennzeichnet, dass**
der Stopfen (36) derart bereitgestellt wird, dass er ein Zugmittel (44) und/oder Haltemittel (42) für den Schlauchkörper (16) aufweist.

11. Verfahren nach einem der vorhergehenden Ansprüche,
**dadurch gekennzeichnet, dass**
vor dem Konsolidieren eine Verbindungsgeometrie (46) in das Formwerkzeug (18) eingelegt wird und beim Konsolidieren die Verbindungsgeometrie (46) formschlüssig und / oder stoffschlüssig mit dem Grundkörper (24) verbunden wird.

12. Verfahren nach Anspruch 11,
**dadurch gekennzeichnet, dass**
die Verbindungsgeometrie (46) eine Verlängerung des Rohres (2) darstellt und sich die Innenwand (26) des Grundkörpers (24) in die Verbindungsgeometrie (46) fortsetzt und auch die Innenwand (26) der Verbindungsgeometrie (46) zumindest abschnittsweise mit dem Schlauchkörper (16) ausgekleidet und konsolidiert wird.

13. Verfahren nach einem der vorhergehenden Ansprüche,
**dadurch gekennzeichnet, dass**
der Grundkörper (24) und der Schlauchkörper (16) jeweils mit einem Hauptrohr (50) und wenigstens einem vom Hauptrohr (50) abzweigenden Abzweigrohr (52) bereitgestellt werden.

14. Verfahren nach einem der vorhergehenden Ansprüche,
**dadurch gekennzeichnet, dass**
das Material des Schlauchkörpers (16) und/oder des Faserverbundmaterials (8) derart gewählt wird, dass es zumindest in dem Fertigungszustand (F) gegen eine Eindiffusion von Stoffen in den Innenraum (6) beständig ist, die eine elektrische Leitfähigkeit des bestimmungsgemäß im Rohr (2) aufzunehmenden Mediums (14) erhöhen würden.

15. Rohr (2),
- das ein thermoformbares Faserverbundmaterial (8) enthält, wobei das Rohr (2) dazu bestimmt ist, in seinem Innenraum (6) im Betrieb (B) ein bestimmtes Medium (14) aufzunehmen, wobei das Faserverbundmaterial (8) gegenüber dem Medium (14) nicht beständig ist,
- mit einem Grundkörper (24) aus dem Faserverbundmaterial (8),
- mit einem Schlauchkörper (16), der in einem Innenraum (6) des Grundkörpers (24) angeordnet ist und an einer Innenwand (26) des Grundkörpers (24) angelegt ist,
- wobei der Grundkörper (24) zusammen mit dem Schlauchkörper (16) zum Rohr (2) konsolidiert ist,
- wobei der Schlauchkörper (16) so gewählt ist, dass dessen Material medienbeständig gegenüber dem bestimmungsgemäß im Rohr (2) aufzunehmenden Medium (14) ist.

16. Rohr (2) nach Anspruch 15,
**dadurch gekennzeichnet, dass**
das Rohr (2) nach dem Verfahren nach einem der Ansprüche 1 bis 13 hergestellt ist.
